# EUROPEAN PATENT APPLICATION

(11) **EP 4 650 399 A1**
(43) Date of publication of application: **19.11.2025**
(21) Application number: 23916266.2
(22) Date of filing: 25.12.2023
(51) Int. Cl.: C08L 77/06, C08G 69/26, C08K 3/013

(54) **RESIN COMPOSITION AND MOLDED ARTICLE**

(30) Priority: 11.01.2023 JP 2023002120
(71) Applicant: MITSUBISHI GAS CHEMICAL COMPANY, INC., Chiyoda-ku Tokyo 100-8324 (JP)
(72) Inventor: SHIMOMURA, Yuki, Hiratsuka-shi, Kanagawa 254-0016 (JP); ODA, Takafumi, Hiratsuka-shi, Kanagawa 254-0016 (JP); OGURO, Hatsuki, Hiratsuka-shi, Kanagawa 254-0016 (JP); OTSUKA, Kosuke, Tokyo 100-8324 (JP)
(74) Representative: Vossius & Partner Patentanwälte Rechtsanwälte mbB
(86) International application number: PCT/JP2023/046335
(87) International publication number: WO 2024/150652

(57) **Abstract**

Provided is a resin composition containing from 75 to 99 parts by mass of a polyamide resin (A) and from 25 to 1 parts by mass of a polyamide resin (B). The polyamide resin (A) includes a diamine-derived structural unit and a dicarboxylic acid-derived structural unit, 70 mol% or higher of the diamine-derived structural units being derived from a bis(aminomethyl)cyclohexane, and 70 mol% or higher of the dicarboxylic acid-derived structural unit being derived from an α,ω-linear aliphatic dicarboxylic acid having from 4 to 20 carbons. The polyamide resin (B) includes a diamine-derived structural unit and a dicarboxylic acid-derived structural unit, 70 mol% or higher of the diamine-derived structural unit being derived from an aliphatic diamine having from 4 to 20 carbons, and 70 mol% or higher of the dicarboxylic acid-derived structural unit being derived from terephthalic acid. Also provided is a molded article.

## Description

### Technical Field

The present invention relates to a resin composition and a molded article. In particular, the present invention relates to a resin composition in which a polyamide resin is used as a major component.

### Background Art

Crystalline polyamide resins represented by nylon 6 and nylon 66 exhibit excellent properties such as toughness, chemical resistance, and electrical properties and are easily melted and molded, and therefore such crystalline polyamide resins are widely used as engineering plastics in applications such as automobile parts, machine parts, and parts for electrical and electronic equipment.

Here, in cases such as injection molding a polyamide resin, a high crystallization rate may be required. For example, Patent Document 1 discloses, as a polyamide resin composition having a high crystallization rate, a polyamide resin composition containing a polyamide resin (A) obtained from xylylenediamine and sebacic acid, and a polyamide 66 (B), the polyamide resin composition being characterized in that the melting point of the polyamide 66 (B) is higher than the melting point of the polyamide resin (A) by more than 50°C, and the temperature difference between the crystallization temperature of the polyamide resin (A) and the crystallization temperature of the polyamide 66 (B) is 50°C or less.

### Citation List

### Patent Document

Patent Document 1: JP 2012-062417 A

### Summary of Invention

### Technical Problem

As described above, studies have been conducted to increase the crystallization rate of a polyamide resin composition by blending a polyamide resin having a relatively fast crystallization rate with a polyamide resin having a relatively slow crystallization rate.

However, when the crystallization rate is increased, the glass transition temperature (Tg) of a resin composition usually tends to decrease.

The present invention aims to solve this issue, and thus an object of the present invention is to provide a resin composition having a fast crystallization rate while maintaining a high glass transition temperature, and to provide a molded article.

### Solution to Problem

As a result of studies conducted by the present inventor(s) on the basis of the above-described issue, the inventor(s) discovered that the above-described issue can be solved by blending a polyamide resin composed of a bis(aminomethyl)cyclohexane, an aliphatic dicarboxylic acid, and the like with a polyamide resin composed of an aliphatic diamine, terephthalic acid, and the like at a predetermined ratio.

Specifically, the aforementioned issue is solved by the following means.
<1> A resin composition containing from 75 to 99 parts by mass of a polyamide resin (A) and from 25 to 1 parts by mass of a polyamide resin (B),
   the polyamide resin (A) including a diamine-derived structural unit and a dicarboxylic acid-derived structural unit, 70 mol% or higher of the diamine-derived structural unit being derived from a bis(aminomethyl)cyclohexane, and 70 mol% or higher of the dicarboxylic acid-derived structural unit being derived from an α,ω-linear aliphatic dicarboxylic acid having from 4 to 20 carbons, and
   the polyamide resin (B) including a diamine-derived structural unit and a dicarboxylic acid-derived structural unit, 70 mol% or higher of the diamine-derived structural unit being derived from an aliphatic diamine having from 4 to 20 carbons, and 70 mol% or higher of the dicarboxylic acid-derived structural unit being derived from terephthalic acid.
<2> The resin composition according to <1>, wherein in the polyamide resin (A), the bis(aminomethyl)cyclohexane includes 1,3-bis(aminomethyl)cyclohexane and/or 1,4-bis(aminomethyl)cyclohexane.
<3> The resin composition according to <1> or <2>, wherein in the polyamide resin (A), the α,ω-linear aliphatic dicarboxylic acid having from 4 to 20 carbons includes adipic acid.
<4> The resin composition according to any one of <1> to <3>, wherein in the polyamide resin (B), the aliphatic diamine having from 4 to 20 carbons includes at least one selected from 1,6-hexanediamine, 1,9-nonanediamine, and 1,10-decanediamine.
<5> The resin composition according to <1>, wherein in the polyamide resin (A), the bis(aminomethyl)cyclohexane includes 1,3-bis(aminomethyl)cyclohexane and/or 1,4-bis(aminomethyl)cyclohexane, and the α,ω-linear aliphatic dicarboxylic acid having from 4 to 20 carbons includes adipic acid, and in the polyamide resin (B), the aliphatic diamine having from 4 to 20 carbons includes at least one selected from 1,6-hexanediamine, 1,9-nonanediamine, and 1,10-decanediamine.
<6> The resin composition according to any one of <1> to <5>, wherein a glass transition temperature (Tg) of the resin composition according to differential scanning calorimetry (DSC) is from 100 to 200°C.
<7> The resin composition according to any one of <1> to <6>, wherein a difference (Tm - Tcc) between a melting point (Tm) and a crystallization temperature at temperature drop (Tcc) of the resin composition as measured according to differential scanning calorimetry (DSC) is from 5 to 35°C.
<8> The resin composition according to any one of <1> to <7>, further containing a reinforcing filler.
<9> A molded article including the resin composition described in any one of <1> to <8>.

### Advantageous Effects of Invention

According to the present invention, a resin composition having a fast crystallization rate while maintaining a high glass transition temperature, and a molded article can be provided.

### Description of Embodiments

Embodiments for carrying out the present invention (hereinafter, such embodiments may be referred to as "the present embodiment") are described in detail below. It should be noted that the present embodiments described below are illustrative examples for explaining the present invention, and the present invention is not limited to only the present embodiments described below.

A numerical range "from A to B" as used herein includes both endpoints, "A" and "B," as the lower and upper limits, respectively.

As used herein, various physical property values and characteristic values are those at 23°C unless otherwise stated.

In the present specification, unless otherwise specified, the weight average molecular weight and the number average molecular weight can be measured according to the description in paragraph [0047] of JP 2018-165298 A, the contents of which are incorporated herein.

When the measurement methods or the like described in the standards presented in the present specification differ depending on the year, the measurement methods or the like are based on the standards as of January 1, 2022, unless otherwise stated.

In the present specification, a bis(aminomethyl)cyclohexane may be referred to as BAC and a cyclohexanedicarboxylic acid may be referred to as CHDA.

The resin composition of the present embodiment includes from 75 to 99 parts by mass of a polyamide resin (A) and from 25 to 1 parts by mass of a polyamide resin (B), and is characterized in that the polyamide resin (A) includes diamine-derived structural units and dicarboxylic acid-derived structural units, 70 mol% or higher of the diamine-derived structural unit being derived from a bis(aminomethyl)cyclohexane, and 70 mol% or higher of the dicarboxylic acid-derived structural unit being derived from an α,ω-linear aliphatic dicarboxylic acid having from 4 to 20 carbons, and the polyamide resin (B) includes diamine-derived structural units and dicarboxylic acid-derived structural units, 70 mol% or higher of the diamine-derived structural unit being derived from an aliphatic diamine having from 4 to 20 carbons, and 70 mol% or higher of the dicarboxylic acid-derived structural unit being derived from terephthalic acid.

By virtue of such a configuration, a resin composition having a fast crystallization rate while maintaining a high glass transition temperature can be obtained. In particular, it is known that when a polyamide resin having a fast crystallization rate is blended into a polyamide resin having a slow crystallization rate, the crystallization rate is increased, but the glass transition temperature is usually reduced. In the present embodiment, a resin composition having a fast crystallization rate while achieving a high glass transition temperature is obtained, and thus the value is high.

### Polyamide Resin (A)

The polyamide resin (A) includes diamine-derived structural units and dicarboxylic acid-derived structural units, 70 mol% or higher of the diamine-derived structural unit being derived from a bis(aminomethyl)cyclohexane, and 70 mol% or higher of the dicarboxylic acid-derived structural unit being derived from an α,ω-linear aliphatic dicarboxylic acid having from 4 to 20 carbons. Here, the total of the diamine-derived structural units is 100 mol%, and the total of the dicarboxylic acid-derived structural units is 100 mol%.

In the polyamide resin (A), preferably 80 mol% or higher of the diamine-derived structural units are derived from a bis(aminomethyl)cyclohexane, and depending on details such as the application, more preferably 90 mol% or higher, even more preferably 95 mol% or higher, and yet even more preferably 99 mol% or higher are derived from a

### bis(aminomethyl)cyclohexane.

The bis(aminomethyl)cyclohexane is preferably 1,3-bis(aminomethyl)cyclohexane and/or 1,4-bis(aminomethyl)cyclohexane.

A preferred first embodiment of the bis(aminomethyl)cyclohexane is a case in which 1,3-bis(aminomethyl)cyclohexane is included.

A preferred second embodiment of the bis(aminomethyl)cyclohexane is a case in which 1,4-bis(aminomethyl)cyclohexane is included.

A preferred third embodiment of the bis(aminomethyl)cyclohexane is a case in which a mixture of 1,3-bis(aminomethyl)cyclohexane and 1,4-bis(aminomethyl)cyclohexane is included.

In the polyamide resin (A), the ratio of the trans isomer of the bis(aminomethyl)cyclohexane (the ratio when the total of the trans isomer and the cis isomer is 100 mol%) may be, for example, 0 mol% or higher, 10 mol% or higher, 20 mol% or higher, 25 mol% or higher, 30 mol% or higher, 35 mol% or higher, or 40 mol% or higher, and for example, may be 100 mol% or less, 50 mol% or less, 45 mol% or less, 40 mol% or less, 35 mol% or less, 30 mol% or less, 25 mol% or less, 20 mol% or less, 10 mol% or less, 5 mol% or less, or 3 mol% or less.

In particular, when the bis(aminomethyl)cyclohexane is 1,3-bis(aminomethyl)cyclohexane, the ratio of the trans isomer is preferably from 0 to 50 mol%, and may be from 0 to 20 mol%, or from 0 to 10 mol%. When the ratio of the trans isomer is equal to or more than the aforementioned lower limit, the resin composition can be made less susceptible to thermal degradation during molding.

On the other hand, when the bis(aminomethyl)cyclohexane is 1,4-bis(aminomethyl)cyclohexane, the ratio of the trans isomer is preferably from 35 to 55 mol%, and more preferably from 40 to 50 mol%. By setting the ratio of the trans isomer to the aforementioned upper limit or lower, the resin composition can be made less susceptible to thermal degradation during molding.

In the polyamide resin (A), examples of the diamine other than bis(aminomethyl)cyclohexane include aliphatic diamines, alicyclic diamines other than the bis(aminomethyl)cyclohexane, and aromatic diamines.

The aliphatic diamine is preferably an aliphatic diamine having from 6 to 12 carbons, and examples include linear aliphatic diamines, such as 1,6-hexanediamine, 1,7-heptanediamine, 1,8-octanediamine, 1,9-nonanediamine, 1,10-decanediamine, 1,11-undecanediamine, and 1,12-dodecanediamine; and branched aliphatic diamines, such as 2-methyl-1,8-octanediamine, 4-methyl-1,8-octanediamine, 5-methyl-1,9-nonanediamine, 2,2,4-/2,4,4-trimethylhexanediamine, 2-methyl-1,5-pentanediamine, 2-methyl-1,6-hexanediamine, and 2-methyl-1,7-heptanediamine.

Examples of the alicyclic diamine other than the bis(aminomethyl)cyclohexane include isophorone diamine, 4,4'-thiobis(cyclohexane-1-amine), and 4,4'-thiobis(cyclohexane-1-amine).

Examples of the aromatic diamine include xylylenediamine.

In the polyamide resin (A), preferably 80 mol% or higher of the dicarboxylic acid-derived structural units are derived from an α,ω-linear aliphatic dicarboxylic acid having from 4 to 20 carbons, and more preferably 90 mol% or higher, still more preferably 95 mol% or higher, and yet even more preferably 99 mol% or higher are derived from an α,ω-linear aliphatic dicarboxylic acid having from 4 to 20 carbons.

The α,ω-linear aliphatic dicarboxylic acid having from 4 to 20 carbons is preferably an α,ω-linear aliphatic dicarboxylic acid having from 4 to 15 carbons, and more preferably an α,ω-linear aliphatic dicarboxylic acid having from 4 to 8 carbons.

Specific examples of the α,ω-linear aliphatic dicarboxylic acid having from 4 to 20 carbons include succinic acid, glutaric acid, adipic acid, pimelic acid, suberic acid, azelaic acid, sebacic acid, dodecanedioic acid, and tetradecanedioic acid, and adipic acid, sebacic acid, or dodecanedioic acid is preferred, adipic acid or sebacic acid is more preferred, and adipic acid is even more preferred.

Examples of dicarboxylic acids other than the α,ω-linear aliphatic dicarboxylic acid having from 4 to 20 carbons can include alicyclic dicarboxylic acids such as 1,3-cyclohexanedicarboxylic acid and 1,4-cyclohexanedicarboxylic acid; phthalic acid compounds such as isophthalic acid, terephthalic acid, and orthophthalic acid; and naphthalenedicarboxylic acid isomers such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these dicarboxylic acids can be used alone, or two or more thereof can be mixed and used.

A first embodiment of the polyamide resin (A) used in the present embodiment is an aspect in which 90 mol% or higher (preferably 95 mol% or higher, and more preferably 99 mol% or higher) of the diamine-derived structural unit is derived from bis(aminomethyl)cyclohexane, and 70 mol% or higher (preferably 95 mol% or higher, and more preferably 99 mol% or higher) of the dicarboxylic acid-derived structural unit is derived from adipic acid. In the present embodiment, the bis(aminomethyl)cyclohexane is preferably 1,3-bis(aminomethyl)cyclohexane and/or 1,4-bis(aminomethyl)cyclohexane.

A second embodiment of the polyamide resin (A) used in the present embodiment is an aspect in which 90 mol% or higher (preferably 95 mol% or higher, and more preferably 99 mol% or higher) of the diamine-derived structural unit is derived from bis(aminomethyl)cyclohexane, from 99 to 70 mol% of the dicarboxylic acid-derived structural unit is derived from an α,ω-linear aliphatic dicarboxylic acid having from 4 to 20 carbons, and from 1 to 30 mol% of the dicarboxylic acid-derived structural unit is derived from a cyclohexanedicarboxylic acid (preferably 1,4-cyclohexanedicarboxylic acid) (provided that the total of the structural units derived from the α,ω-linear aliphatic dicarboxylic acid having from 4 to 20 carbons and the structural units derived from the cyclohexanedicarboxylic acid does not exceed 100 mol%). Here, the proportion of the structural units derived from a cyclohexanedicarboxylic acid among the dicarboxylic acid-derived structural units is preferably 5 mol% or higher, and is more preferably 20 mol% or less, and even more preferably 15 mol% or less.

The polyamide resin (A) used in the present embodiment contains a diamine unit and a dicarboxylic acid unit as main components, but a case in which a monomer unit other than these is contained is not excluded, and, needless to say, the polyamide resin (A) may contain a lactam such as ε-caprolactam or laurolactam, or an aliphatic aminocarboxylic acid unit such as aminocaproic acid or aminoundecanoic acid. Here, the term "main component" indicates that, of the monomer units constituting the polyamide resin (A), the total number of the diamine units and the dicarboxylic acid units is the largest among all the monomer units. In the present embodiment, the total of the diamine units and the dicarboxylic acid units in the polyamide resin (A) preferably accounts for 90.0 mass% or more, and more preferably 95.0 mass% or more, of all the monomer units.

The lower limit of the number average molecular weight (Mn) of the polyamide resin (A) used in the present embodiment is preferably 5000 or higher, and more preferably 10000 or higher. The upper limit of the Mn described above is preferably 100000 or less, more preferably 50000 or less, and still more preferably 30000 or less.

In a case in which the resin composition of the present embodiment contains two or more types of the polyamide resin (A), the Mn is the Mn of the mixture. The same applies to the polyamide resin (B).

The polyamide resin (A) used in the present embodiment has a melting point of preferably 210°C or higher, more preferably 240°C or higher, even more preferably 250°C or higher, and yet even more preferably 260°C or higher. The upper limit is not particularly defined, but an upper limit melting point of 290°C or lower is practical.

When the resin composition of the present embodiment contains two or more types of the polyamide resin (A), the melting point thereof is the melting point of the polyamide having the highest melting point. The same applies to the polyamide resin (B).

The glass transition temperature of the polyamide resin (A) is preferably 90°C or higher, more preferably 100°C or higher, and even more preferably 105°C or higher. The upper limit of the glass transition temperature is not particularly defined, but an upper limit of 150°C or lower is practical.

When the resin composition of the present embodiment includes two or more types of the polyamide resin (A), the glass transition temperature thereof is defined by the polyamide having the highest glass transition temperature. The same applies to the polyamide resin (B).

The melting point and glass transition temperature of the polyamide resin (A) are measured according to the description in the Examples section described below.

### Polyamide Resin (B)

The resin composition of the present embodiment contains a polyamide resin (B) that includes diamine-derived structural units and dicarboxylic acid-derived structural units, with 70 mol% or more of the diamine-derived structural units being derived from an aliphatic diamine having from 4 to 20 carbons, and 70 mol% or more of the dicarboxylic acid-derived structural units being derived from terephthalic acid. Here, the total of the diamine-derived structural units is 100 mol%, and the total of the dicarboxylic acid-derived structural units is 100 mol%.

In the polyamide resin (B), preferably 80 mol% or higher of the diamine-derived structural units are derived from an aliphatic diamine having from 4 to 20 carbons (preferably a linear aliphatic diamine having from 4 to 20 carbons), and more preferably 90 mol% or higher, even more preferably 95 mol% or higher, and still even more preferably 99 mol% or higher are derived from an aliphatic diamine having from 4 to 20 carbons (preferably a linear aliphatic diamine having from 4 to 20 carbons).

The aliphatic diamine having from 4 to 20 carbons is preferably a linear aliphatic diamine having from 5 to 12 carbons, is more preferably at least one selected from the group consisting of 1,5-pentanediamine, 1,6-hexanediamine, 1,7-heptanediamine, 1,8-octanediamine, 1,9-nonanediamine, and 1,10-decanediamine, is even more preferably 1,6-hexanediamine, 1,9-nonanediamine, or 1,10-decanediamine, is yet even more preferably 1,9-nonanediamine or 1,10-decanediamine, and is still even more preferably 1,10-decanediamine.

Examples of diamines other than the aliphatic diamine having from 4 to 20 carbons can include alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring such as bis(4-aminophenyl)ether, para-phenylenediamine, and bis(aminomethyl)naphthalene. Moreover, a single type thereof may be used alone, or two or more types may be mixed and used.

In the polyamide resin (B), 70 mol% or higher of the dicarboxylic acid-derived structural units are derived from terephthalic acid, and preferably 80 mol% or higher, more preferably 90 mol% or higher, even more preferably 95 mol% or higher, and yet even more preferably 99 mol% or higher are derived from an aliphatic diamine having from 4 to 20 carbons.

Examples of dicarboxylic acids other than terephthalic acid include linear aliphatic dicarboxylic acids such as pimelic acid, suberic acid, adipic acid, sebacic acid, azelaic acid; alicyclic dicarboxylic acids such as 1,3-cyclohexanedicarboxylic acid and 1,4-cyclohexanedicarboxylic acid; phthalic acid compounds, such as isophthalic acid and orthophthalic acid; and naphthalenedicarboxylic acids such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these dicarboxylic acids can be used alone, or two or more thereof can be mixed and used.

A preferred embodiment of the polyamide resin (B) is an aspect in which 70 mol% or higher (preferably 80 mol% or higher, more preferably 90 mol% or higher, even more preferably 95 mol% or higher, and still even more preferably 99 mol% or higher) of the diamine-derived structural units are derived from a linear aliphatic diamine having from 5 to 12 carbons (preferably at least one selected from 1,6-hexanediamine, 1,9-nonanediamine, and 1,10-decanediamine, more preferably at least one selected from 1,9-nonanediamine and 1,10-decanediamine, even more preferably 1,10-decanediamine), and 70 mol% or higher (preferably 80 mol% or higher, more preferably 90 mol% or higher, even more preferably 95 mol% or higher, and still even more preferably 99 mol% or higher) of the dicarboxylic acid-derived structural units are derived from terephthalic acid.

In addition, in the above-described embodiment, some of the dicarboxylic acid-derived structural units may be structural units derived from a cyclohexanedicarboxylic acid. In this case, the proportion of structural units derived from the cyclohexanedicarboxylic acid is preferably 5 mol% or more, and more preferably 20 mol% or less, and even more preferably 15 mol% or less.

The polyamide resin (B) used in the present embodiment contains a diamine unit and a dicarboxylic acid unit as main components, but a case in which a monomer unit other than these is contained is not excluded, and, needless to say, the polyamide resin (B) may contain a lactam such as ε-caprolactam or laurolactam, or an aliphatic aminocarboxylic acid unit such as aminocaproic acid or aminoundecanoic acid. Here, the term "main component" indicates that, of the monomer units constituting the polyamide resin (B), the total number of the diamine units and the dicarboxylic acid units is the largest among all the monomer units. In the present embodiment, the total of the diamine units and the dicarboxylic acid units in the polyamide resin (B) preferably accounts for 90.0 mass% or more, and more preferably 95.0 mass% or more, of all the monomer units.

The lower limit of the number average molecular weight (Mn) of the polyamide resin (B) used in the present embodiment is preferably 5000 or more, more preferably 10000 or more, and still more preferably 20000 or more. The upper limit of the Mn described above is preferably 100000 or less, more preferably 50000 or less, and still more preferably 30000 or less.

The melting point of the polyamide resin (B) used in the present embodiment is preferably 290°C or higher, more preferably 300°C or higher, and even more preferably 310°C or higher. The upper limit melting point is not particularly defined, but an upper limit melting point of 330°C or lower is practical.

The glass transition temperature of the polyamide resin (B) is preferably 120°C or higher, more preferably 130°C or higher, and even more preferably 140°C or higher. The upper limit of the glass transition temperature is not particularly defined, but an upper limit of 170°C or lower is practical.

The melting point and glass transition temperature of the polyamide resin (B) are measured according to the descriptions in the Examples section described below.

### Blending Ratio of Polyamide Resin (A) and Polyamide Resin (B)

The resin composition of the present embodiment includes from 75 to 99 parts by mass of the polyamide resin (A) and from 25 to 1 parts by mass of the polyamide resin (B). In the present embodiment, when the total amount of the polyamide resin (A) and the polyamide resin (B) is 100 parts by mass, the resin composition preferably includes from 75 to 99 parts by mass of the polyamide resin (A) and from 25 to 1 parts by mass of the polyamide resin (B), more preferably includes from 75 to 95 parts by mass of the polyamide resin (A) and from 25 to 5 parts by mass of the polyamide resin (B), and even more preferably includes from 80 to 95 parts by mass of the polyamide resin (A) and from 20 to 5 parts by mass of the polyamide resin (B). The effect of the present embodiment is more effectively exhibited by setting the blending ratio to such a range.

In the resin composition of the present embodiment, when a reinforcing filler is not contained, the total content of the polyamide resin (A) and the polyamide resin (B) preferably accounts for 90 mass% or higher, more preferably 95 mass% or higher, and even more preferably accounts for 97 mass% or higher of the resin composition.

In the resin composition of the present embodiment, when a reinforcing filler is contained, the total content of the polyamide resin (A) and the polyamide resin (B) preferably accounts for 90 mass% or higher, more preferably 95 mass% or higher, and even more preferably 97 mass% or higher of the components of the resin composition excluding the reinforcing filler.

The polyamide resin composition may contain one type of the polyamide resin (A) and one type of the polyamide resin (B), or may contain two or more types of each. When two or more types are contained, the total amount thereof is preferably within the aforementioned ranges.

### Other Polyamide Resin

The resin composition of the present embodiment may or may not include another polyamide resin in addition to the polyamide resins (A) and (B). The other polyamide resin may be an aliphatic polyamide resin or a semi-aromatic polyamide resin.

Examples of the aliphatic polyamide resin include polyamide 6, polyamide 66, polyamide 46, polyamide 6/66 (copolymer of a polyamide 6 component and a polyamide 66 component), polyamide 610, polyamide 612, polyamide 410, polyamide 1010, polyamide 11, polyamide 12, and polyamide 9C (a polyamide formed from a mixed diamine of 1,9-nonanediamine and 2-methyl-1,8-octanediamine and 1,4-cyclohexanedicarboxylic acid).

Examples of the semi-aromatic polyamide resin include polyamide 6I, polyamide 6T/6I, polyamide 9N (a polyamide formed from a mixed diamine of 1,9-nonanediamine and 2-methyl-1,8-octanediamine and 2,6-naphthalenedicarboxylic acid), MXD6, which is a polycondensate of meta-xylylenediamine and adipic acid, MXD6I, which is a polycondensate of meta-xylylenediamine, adipic acid, and isophthalic acid, MP6, which is a polycondensate of meta-xylylenediamine, para-xylylenediamine, and adipic acid, MXD10, which is a polycondensate of meta-xylylenediamine and sebacic acid, MP10, which is a polycondensate of meta-xylylenediamine, para-xylylenediamine, and sebacic acid, and PXD10, which is a polycondensate of para-xylylenediamine and sebacic acid.

When the resin composition of present embodiment contains another polyamide resin, the content of the other polyamide resin in relation to 100 parts by mass of the polyamide resins (A) and (B) contained in the resin composition of the present embodiment is preferably 1 part by mass or more, and may be 5 parts by mass or more, and is preferably 30 parts by mass or less, more preferably 20 parts by mass or less, and even more preferably 10 parts by mass or less.

The resin composition of the present embodiment may contain only one type of the other polyamide resin or may contain two or more types thereof. When two or more types are contained, the total amount thereof is preferably within the aforementioned ranges.

In addition, the resin composition of the present embodiment may be configured to contain substantially no other polyamide resin besides the polyamide resins (A) and (B). Containing substantially no other polyamide resin means that the content of other polyamide resins in relation to 100 parts by mass of the total of the polyamide resins (A) and (B) is less than 5 parts by mass, preferably 1 part by mass or less, more preferably 0.1 parts by mass or less, and even more preferably 0.01 parts by mass or less.

### Reinforcing Filler

The resin composition of the present embodiment may contain a reinforcing filler. Including a reinforcing filler can improve the mechanical strength of the obtained molded article.

The type of reinforcing filler that can be used in the present embodiment is not particularly specified, and the reinforcing filler may be any type, such as fibers, a filler, flakes, or beads, but fibers are preferable.

When the reinforcing filler is fibers, the fibers may be short fibers or long fibers.

When the reinforcing filler is short fibers or a filler or beads, etc., examples of the form of the resin composition of the present embodiment include pellets, powdered pellets, and a film formed from the pellets.

When the reinforcing filler is long fibers, examples of the reinforcing filler include long fibers for a so-called, uni-directional (UD) material, and sheet-shaped long fibers such as a woven or knitted fabric. When these long fibers are used, a sheet-shaped resin composition (for example, a prepreg) can be formed by impregnating the components other than the reinforcing filler of the resin composition of the present embodiment into the reinforcing filler, which is long fibers formed into a sheet shape.

Examples of the raw material of the reinforcing filler include inorganic materials such as glass, carbon (carbon fibers, etc.), alumina, boron, ceramic, metal (steel, etc.), asbestos, clay, zeolite, potassium titanate, barium sulfate, titanium oxide, silicon oxide, aluminum oxide, and magnesium hydroxide, and organic materials such as plants (including, for example, kenaf and bamboo), aramid, polyoxymethylene, aromatic polyamides, polyparaphenylene benzobisoxazole, and ultra-high molecular weight polyethylene, and of these, glass is preferable.

The resin composition of the present embodiment preferably contains glass fibers as the reinforcing filler.

The glass fibers are selected from glass compositions such as A glass, C glass, E glass, R glass, D glass, M glass, and S glass, and E glass (non-alkaline glass) is particularly preferable.

The term glass fiber refers to a fibrous material having a perfect circular or polygonal cross-sectional shape when the glass fiber is cut at an angle perpendicular to the length direction. The number average fiber diameter of a single glass fiber is usually from 1 to 25 µm, and preferably from 5 to 17 µm. Moldability of the resin composition tends to further improve when the number average fiber diameter is set to 1 µm or more. In addition, the appearance of the obtained molded body and the reinforcing effect tend to improve by setting the number average fiber diameter to 25 µm or less. The glass fiber may be a single fiber, or a fiber obtained by intertwining a plurality of single fibers.

The form of the glass fiber may be any of a glass roving in which a single fiber or a plurality of intertwined single fibers are continuously wound, chopped strands cut to uniform lengths of from 1 to 10 mm (namely, glass fibers having a number average fiber length of from 1 to 10 mm), or milled fibers crushed to an approximate length of from 10 to 500 µm (namely, glass fibers having a number average fiber length of from 10 to 500 µm), and chopped strands cut to uniform lengths of from 1 to 10 mm are preferable. Glass fibers of different forms may be used in combination.

Also, the glass fiber preferably has an irregular cross-sectional shape. In this irregular cross-sectional shape, the flatness represented by the major axis/minor axis ratio of a cross-section perpendicular to the length direction of the fiber is, for example, from 1.5 to 10, preferably from 2.5 to 10, more preferably from 2.5 to 8, and particularly preferably from 2.5 to 5.

As long as the characteristics of the resin composition of the present embodiment are not significantly impaired, the glass fiber may be, for example, a glass fiber that has been oxidized or a glass fiber that has been surface treated with a silane-based compound, an epoxy-based compound, a urethane-based compound, or the like in order to improve affinity with the resin component.

When the resin composition of the present embodiment includes a reinforcing filler (preferably glass fibers), the content of the reinforcing filler in the resin composition is preferably 10 mass% or more, more preferably 20 mass% or more, and still more preferably 25 mass% or more. The mechanical strength of the obtained molded body tends to further improve by setting the content of the reinforcing filler to equal to or more than the lower limit described above. The content of the reinforcing filler (preferably glass fibers) in the resin composition is preferably 60 mass% or less, more preferably 50 mass% or less, and even more preferably 45 mass% or less, and may be 40 mass% or less or 35 mass% or less according to details such as the application. Setting the content of the reinforcing filler to equal to or less than the upper limit described above tends to improve the appearance of the molded body and further improve the fluidity of the resin composition.

The resin composition in the present embodiment may contain only a single type of reinforcing filler (preferably glass fibers), or may contain two or more types. When two or more types thereof are contained, the total amount thereof is preferably within the aforementioned ranges.

### Nucleator

The resin composition of the present embodiment may contain a nucleator. The inclusion of a nucleator can accelerate the crystallization rate.

The nucleator is not particularly limited as long as it does not melt during melt processing and can become a nucleus of a crystal in a cooling process, and may be an organic nucleator or an inorganic nucleator, but is preferably an inorganic nucleator.

Examples of inorganic nucleators include graphite, molybdenum disulfide, barium sulfate, talc, calcium carbonate, sodium phosphate, mica and kaolin. The inorganic nucleator is more preferably at least one type selected from talc and calcium carbonate, and talc is even more preferable.

The organic nucleator is not particularly limited, and a known nucleator can be used. For example, the nucleator is preferably at least one type selected from a dibenzylidene sorbitol-based nucleator, a nonitol-based nucleator, a phosphate-based nucleator, a rosin-based nucleator, or a metal benzoate-based nucleator.

The lower limit of the number average particle size of the nucleator is preferably 0.1 µm or higher. In addition, the upper limit of the number average particle size of the nucleator is preferably 40 µm or less, more preferably 30 µm or less, even more preferably 28 µm or less, still more preferably 15 µm or less, and yet even more preferably 10 µm or less. When the number average particle size is set to 40 µm or less, the number of nucleators that become nuclei increases in proportion to the blended amount of the nucleator, and thus the crystal structure tends to be more stable.

Also, per 100 parts by mass of the total amount of the polyamide resins (the polyamide resin (A), the polyamide resin (B), and the other polyamide resin), the content of the nucleator in the resin composition of the present embodiment is 0.1 parts by mass or more, preferably 0.5 parts by mass or more, and more preferably 0.9 parts by mass or more. The crystal state of the resin composition can be more sufficiently stabilized by setting the content of the nucleator to equal to or more than the lower limit described above. Also, per 100 parts by mass of the total amount of the polyamide resins, the content of the nucleator in the resin composition of the present embodiment is 10 parts by mass or less, preferably 5 parts by mass or less, and more preferably 3 parts by mass or less.

When the resin composition of the present embodiment contains a nucleator, the resin composition may contain only a single type of nucleator, or may contain two or more types of nucleators. When two or more types thereof are contained, the total amount thereof is preferably within the aforementioned ranges.

### Other Components

The resin composition of the present embodiment may contain other components in addition to those described above.

Examples of other components include a thermoplastic resin other than the polyamide resins, and a resin additive.

Examples of the thermoplastic resin other than the polyamide resins include polyphenylene ether resins and polyester resins.

Examples of resin additives include flame retardants, stabilizers, release agents, elastomers, titanium oxide, hydrolysis resistance improvers, matting agents, plasticizers, dispersants, antistatic agents, coloring inhibitors, antigelling agents, and colorants. For details thereof, refer to the descriptions in paragraphs [0045] to [0092] and [0100] to [0105] of WO 2021/241471, the contents of which are incorporated herein by reference.

In addition, the content of the other components in total is preferably 20.0 mass% or less, more preferably 15.0 mass% or less, even more preferably 10.0 mass% or less, and still more preferably 5.0 mass% or less of the resin composition. The lower limit of the content of the other components is preferably 0.1 mass% or more. A single type of the other components may be used alone, or two or more types may be used in combination.

### Physical Properties of Resin Composition

The glass transition temperature (Tg) of the resin composition of the present embodiment, measured in accordance with differential scanning calorimetry (DSC), is preferably 100°C or higher, more preferably 105°C or higher, and even more preferably 108°C or higher. The upper limit of the glass transition temperature (Tg) is, for example, 200°C or lower, and even at a glass transition temperature (Tg) of 150°C or lower or 130°C or lower, the required performance is sufficiently satisfied.

The melting point (Tm) of the resin composition of the present embodiment, measured in accordance with differential scanning calorimetry (DSC), is preferably 200°C or higher, more preferably 215°C or higher, even more preferably 220°C or higher, still more preferably 240°C or higher, and yet more preferably 250°C or higher, and is preferably 350°C or lower, more preferably 330°C or lower, and even more preferably 300°C or lower, and may be 290°C or lower.

The crystallization temperature at temperature drop (Tcc) of the resin composition of the present embodiment, measured in accordance with differential scanning calorimetry (DSC), is preferably 190°C or higher and more preferably 200°C or higher, and may be 210°C or higher, or 220°C or higher, and is preferably 250°C or lower and more preferably 245°C or lower.

A difference (Tm - Tg) between the melting point (Tm) and the glass transition temperature (Tg) of the resin composition of the present embodiment, measured in accordance with differential scanning calorimetry (DSC), is preferably 175°C or less, more preferably 170°C or less, even more preferably 165°C or less, still more preferably 162°C or less, and yet even more preferably 158°C or less. When the difference between the melting point (Tm) and the glass transition temperature (Tg) is small, the retention stability through heating during molding is excellent. The lower limit of the difference (Tm - Tg) between the melting point (Tm) and the glass transition temperature (Tg) is not particularly specified, but is, for example, 120°C or more, and may be 130°C or more, 140°C or more, or 150°C or more.

Moreover, a difference (Tm - Tcc) between the melting point (Tm) and the crystallization temperature at temperature drop (Tcc) of the resin composition of the present embodiment, measured in accordance with differential scanning calorimetry (DSC), is preferably 43°C or less, more preferably 400°C or less, even more preferably 35°C or less, still more preferably 32°C or less, and yet even more preferably 29°C or less. When the difference between the melting point (Tm) and the crystallization temperature at temperature drop (Tcc) is small, a merit is achieved in that the crystallization rate is fast and the dimensions of the molded article do not easily change. The lower limit of the difference (Tm - Tcc) between the melting point (Tm) and the crystallization temperature at temperature drop (Tcc) is not particularly limited, and is, for example, 5°C or more, and may be 10°C or more, 15°C or more, or 18°C or more.

The melting point (Tm), the glass transition temperature (Tg), and the crystallization temperature at temperature drop (Tcc) are measured according to descriptions in the Examples section described below.

### Method for Producing Resin Composition

In the present embodiment, the method for producing the resin composition is not particularly specified, and a well-known method for producing a thermoplastic resin composition can be widely adopted. Specifically, the resin composition can be produced by premixing each component using various mixing machines, such as a tumbler and a Henschel mixer, and then melt-kneading the components using, for example, a Banbury mixer, a roll, a Brabender mixer, a single-screw extruder, a twin-screw extruder, or a kneader.

In addition, the resin composition can also be produced by, for example, not mixing the components in advance or mixing only some of the components in advance, feeding the components into an extruder using a feeder, and then melt-kneading the components.

Furthermore, pellets can also be produced by, for example, mixing some of the components in advance and feeding the mixture into an extruder to melt-knead the mixture and obtain a composition as a master batch, mixing the master batch again with the remaining components, and then melt-kneading the mixture.

### Molded Article

A molded article of the present embodiment is formed from the resin composition or pellets of the present embodiment.

The method for producing the molded article of the present embodiment is not particularly limited. One example of the molded article is an injection molded article molded by injection molding.

For example, the molded article of the present embodiment may be directly molded by various molding methods after the components are melt-kneaded, or may be molded by various molding methods after the components are melt-kneaded and pelletized, and then melted again.

The method for molding the molded article is not particularly limited, and well-known molding methods can be adopted. Examples thereof include an injection molding method, an injection-compression molding method, an extrusion molding method, a profile extrusion method, a transfer molding method, a hollow molding method, a gas-assisted hollow molding method, a blow molding method, extrusion blow molding, an in-mold coating (IMC) molding method, a rotary molding method, a multi-layer molding method, a two-color molding method, an insert molding method, a sandwich molding method, a foaming molding method, and a pressure molding method.

The shape of the molded article of the present embodiment is not particularly limited, and can be selected as appropriate according to the application and purpose of the molded article. Examples of the shape thereof include board-shaped, plate-shaped, rod-shaped, sheet-shaped, film-like, cylindrical, annular-shaped, circular-shaped, oval-shaped, gear-shaped, polygon-shaped, odd-shaped, hollow, frame-shaped, box-shaped, and panel-shaped molded articles.

The fields of application of the molded articles of the present embodiment are not particularly limited, and the molded articles can be widely used in applications such as transport machine components such as automobile components, general machine components, precision machine components, electronic and electrical equipment components, OA equipment components, building materials and building-related components, medical devices, leisure sporting goods, playground equipment, medical products, household goods such as food packaging films, and defense and aerospace products.

### Examples

Hereinafter, the present invention will be described more specifically with reference to Examples. Details such as materials, usage amounts, proportions, processing details, and processing procedures described in the following Examples can be changed, as appropriate, without departing from the spirit of the present invention. Thus, the scope of the present invention is not limited to the following specific examples.

If it is difficult to obtain a measuring instrument or the like used in Examples due to discontinuation or the like, another instrument with equivalent performance can be used for the measurement.

### 1. Raw Materials

### Synthesis Example 1: Synthesis of 1,4-BAC6

Precisely weighed amounts of 8700 g (59.53 mol) of adipic acid, 1.24 g (0.0073 mol) of calcium hypophosphite, and 0.80 g (0.0097 mol) of sodium acetate were introduced into a pressure-resistant reaction vessel having an internal volume of 50 L and equipped with a stirrer, a partial condenser, a total condenser, a pressure regulator, a thermometer, a dropping funnel and a pump, an aspirator, a nitrogen-introducing tube, a bottom drain valve, and a strand die. The inside of the reaction vessel was thoroughly purged with nitrogen and then sealed, and the temperature was increased to 200°C under stirring while maintaining the pressure in the vessel at 0.4 MPa. After the temperature reached 200°C, drop-wise addition of 8434.5 g (59.29 mol) of 1,4-bis(aminomethyl)cyclohexane stored in the dropping funnel into the molten raw materials in the reaction vessel was started, and the temperature in the reaction tank was continuously increased to 290°C while maintaining the pressure in the vessel at 0.4 MPa and removing the generated condensed water to outside of the system. After the completion of the drop-wise addition of 1,4-bis(aminomethyl)cyclohexane, the pressure in the reaction vessel was gradually returned to normal pressure, and then the pressure in the reaction tank was reduced to 80 kPa using an aspirator to remove the condensed water. The stirring torque of the stirrer was observed under reduced pressure, and stirring was stopped when a predetermined torque was reached. The inside of the reaction tank was then pressurized with nitrogen, the bottom drain valve was opened, and the polymer was extruded from the strand die to form a strand and then cooled and pelletized by using a pelletizer, and 1,4-BAC6 (BAC trans isomer ratio of 40 mol%) was obtained.

### Synthesis Example 2: Synthesis of 1,4-BAC6C

Precisely weighed amounts of 7750 g (53.03 mol) of adipic acid, 1014.5 g (5.89 mol) of 1,4-cyclohexanedicarboxylic acid, 1.23 g (0.0072 mol) of calcium hypophosphite, and 0.79 g (0.0096 mol) of sodium acetate were inserted into the same pressure-resistant reaction vessel as that of Synthesis Example 1, and the inside of the reaction vessel was thoroughly purged with nitrogen gas and then sealed, after which the reaction vessel was heated to 180°C under stirring while the pressure in the reaction vessel was maintained at 0.4 MPa. After the temperature reached 180°C, drop-wise addition of 8243.6 g (57.95 mol) of 1,4-bis(aminomethyl)cyclohexane stored in the dropping funnel into the molten raw materials in the reaction vessel was started, and the temperature in the reaction tank was continuously increased to 290°C while maintaining the pressure in the vessel at 0.4 MPa and removing the generated condensed water to outside of the system. After the completion of the drop-wise addition of 1,4-bis(aminomethyl)cyclohexane, the pressure in the reaction vessel was gradually returned to normal pressure, and then the pressure in the reaction tank was reduced to 80 kPa using an aspirator to remove the condensed water. The stirring torque of the stirrer was observed under reduced pressure, and stirring was stopped when a predetermined torque was reached. The inside of the reaction tank was then pressurized with nitrogen, the bottom drain valve was opened, and the polymer was extruded from the strand die to form a strand and then cooled and pelletized by using a pelletizer, and 1,4-BAC6C (BAC trans isomer ratio of 40 mol%) was obtained.

### Synthesis Example 3: Synthesis of 1,3-BAC6

Precisely weighed amounts of 10500 g (71.85 mol) of adipic acid, 9.43 g (0.0890 mol) of sodium hypophosphite, and 3.65 g (0.0445 mol) of sodium acetate were inserted into the same pressure-resistant reaction vessel as that of Synthesis Example 1, and the inside of the reaction vessel was thoroughly purged with nitrogen gas and then sealed, after which the reaction vessel was heated to 190°C under stirring while the pressure in the reaction vessel was maintained at 0.4 MPa. After the temperature reached 190°C, drop-wise addition of 10373.1 g (72.93 mol) of 1,3-bis(aminomethyl)cyclohexane stored in the dropping funnel into the molten raw materials in the reaction vessel was started, and the temperature in the reaction tank was continuously increased to 255°C while maintaining the pressure in the vessel at 0.4 MPa and removing the generated condensed water to outside of the system. After the completion of the drop-wise addition of 1,3-bis(aminomethyl)cyclohexane, the pressure in the reaction vessel was gradually returned to normal pressure, and then the pressure in the reaction tank was reduced to 80 kPa using an aspirator to remove the condensed water. The stirring torque of the stirrer was observed under reduced pressure, and stirring was stopped when a predetermined torque was reached. The inside of the reaction tank was then pressurized with nitrogen, the bottom drain valve was opened, and the polymer was extruded from the strand die to form a strand and then cooled and pelletized by using a pelletizer, and 1,3-BAC6 (BAC trans isomer ratio of 26 mol%) was obtained.

### Synthesis Example 4: Synthesis of 1,4-BAC6

Precisely weighed amounts of 87.00 kg (595.32 mol) of adipic acid, 12.35 g (0.0726 mol) of calcium hypophosphite, and 7.94 g (0.0968 mol) of sodium acetate were introduced into a pressure-resistant reaction vessel having an internal volume of 500 L and equipped with a stirrer, a partial condenser, a total condenser, a pressure regulator, a thermometer, a dropping funnel and a pump, an aspirator, a nitrogen-introducing tube, a bottom drain valve, and a strand die. The inside of the reaction vessel was thoroughly purged with nitrogen and then sealed, and the temperature was increased to 200°C under stirring while maintaining the pressure in the vessel at 0.4 MPa. After the temperature reached 200°C, dropwise addition of 84.35 kg (592.94 mol) of 1,4-bis(aminomethyl)cyclohexane stored in the dropping funnel, into the molten raw materials in the reaction vessel, was initiated, and the temperature in the reaction tank was continuously increased to 290°C while maintaining the pressure in the vessel at 0.4 MPa and removing the generated condensed water to outside of the system. After the completion of the drop-wise addition of 1,4-bis(aminomethyl)cyclohexane, the pressure in the reaction vessel was gradually returned to normal pressure, and then the pressure in the reaction tank was reduced to 80 kPa using an aspirator to remove the condensed water. The stirring torque of the stirrer was observed under reduced pressure, and stirring was stopped when a predetermined torque was reached. The inside of the reaction tank was then pressurized with nitrogen, the bottom drain valve was opened, and the polymer was extruded from the strand die to form a strand and then cooled and pelletized by using a pelletizer, and 1,4-BAC6 (BAC trans isomer ratio of 45 mol%) was obtained.
PA10T: polyamide resin containing 1,10-decanediamine and terephthalic acid as main components, manufacturer: Unitika Ltd., product number: XecoT XN400
PA6T: polyamide resin containing 1,6-hexanediamine and terephthalic acid as main components, manufacturer: Mitsui Chemicals, Inc., product number: Arlen AE4200
PA9T: polyamide resin containing 1,9-nonanediamine and terephthalic acid as main components, manufacturer: Kuraray Co., Ltd., product number: Genestar N1000A
Glass fibers: manufacturer: Nippon Electric Glass Co., Ltd., product number: T-296GH
Nucleator: talc, Micron White #5000A, available from Hayashi Kasei Co., Ltd.

### Examples 1 to 11, Comparative Examples 1 to 4

### Compound

The various components were precisely weighed as indicated in Tables 1 to 3, and the components other than the glass fibers were blended in a tumbler, and then the mixture was introduced from the base of a twin-screw extruder (TEM26SS, available from Shibaura Machine Co., Ltd.) and melted. Subsequently, the glass fibers were side-fed to prepare pellets of the resin composition. The temperature of the twin-screw extruder was set to 315°C.

### Measurement of Thermophysical Properties of Resin Composition

The glass transition temperature (Tg, unit: °C), the hot crystallization temperature (Tch, unit:°C), the hot crystallization enthalpy (Hch, unit: J/g), the melting point (Tm, unit:°C), the enthalpy of fusion (Hm, unit: J g), the crystallization temperature at temperature drop (Tcc, unit: °C), and the cold crystallization enthalpy (Hcc, unit: J/g) of the obtained resin composition (pellet) was measured by differential scanning calorimetry (DSC). The DSC measurements were carried out in accordance with JIS K7121 and K7122. A differential scanning calorimeter was used. The obtained resin composition (pellets) was crushed and placed in a measuring pan of the differential scanning calorimeter, and then heated under a nitrogen atmosphere to a temperature of 20°C higher than the melting point indicated in Tables 1 to 3 at a temperature increase rate of 10°C/min. Immediately after the temperature increase was completed, the measurement pan was removed and rapidly cooled by being pressed against dry ice. Measurements were implemented after cooling. As the measurement conditions, the temperature was increased to a temperature higher than the melting point at a temperature increase rate of 10°C/min, and then maintained at that temperature for 5 minutes, after which the temperature was reduced to 100°C at a temperature decrease rate of -5°C/min, and measurements were then carried out to determine the various thermophysical property values.

Moreover, Tm - Tcc (unit: °C) and Tm - Tg (unit:°C) were calculated from the above-described measured values.

The "DSC-60" available from Shimadzu Corporation was used as the differential scanning calorimeter.

The results are found in the following tables.

**Table 1**

| | | Example 1 | Example 2 | Example 3 | Example 4 | Example 5 | Comparative Example 1 |
|---|---|---|---|---|---|---|---|
| Polyamide resin (A) | Type | 1,4-BAC6 | | | | | 1,4-BAC6 |
| | t ratio (mol%) of BAC | 40 | | | 40 | | 40 |
| | Content (mass%) | 95 | 90 | 80 | 90 | 90 | 100 |
| Polyamide resin (B) | Type | PA10T | | | PA9T | PA6T | - |
| | Content (mass%) | 5 | 10 | 20 | 10 | 10 | - |
| | | | | | | | |

| Physical Properties | Unit | | | | | | |
|---|---|---|---|---|---|---|---|
| Tg | °C | 110 | 110 | 110 | 110 | 110 | 110 |
| Tch | °C | 151 | 150 | 149 | 152 | 146 | 171 |
| Hch | J/g | 28.0 | 22.4 | 19.7 | 21.6 | 18.1 | 28.4 |
| Tm | °C | 263 | 263 | 263 | 262 | 261 | 263 |
| Hm | J/g | 38.1 | 28.8 | 26.3 | 32.6 | 25.7 | 32.3 |
| Tcc | °C | 236 | 236 | 236 | 230 | 236 | 204 |
| Hcc | J/g | 33.4 | 25.4 | 21.6 | 22.8 | 18.3 | 30.8 |
| Tm - Tcc | °C | 27 | 27 | 27 | 31 | 25 | 59 |
| Tm - Tg | °C | 153 | 153 | 153 | 152 | 151 | 153 |

**Table 2**

| | | Example 6 | Example 7 | Example 8 | Comparative Example 2 | Example 9 | Comparative Example 3 |
|---|---|---|---|---|---|---|---|
| Polyamide resin (A) | Type | 1,4-BAC6C | | | 1,4-BAC6C | 1,3-BAC6 | 1,3-BAC6 |
| | t ratio (mol%) of BAC | 40 | | | 40 | 26 | 26 |
| | Content (mass%) | 95 | 90 | 80 | 100 | 90 | 100 |
| Polyamide resin (B) | Type | PA10T | | | - | PA10T | - |
| | Content (mass%) | 5 | 10 | 20 | - | 10 | - |
| | | | | | | | |

| Physical Properties | Unit | | | | | | |
|---|---|---|---|---|---|---|---|
| Tg | °C | 116 | 116 | 116 | 120 | 110 | 109 |
| Tch | °C | 161 | 159 | 158 | 176 | 153 | 191 |
| Hch | J/g | 23.8 | 22.1 | 17.4 | 26.3 | 21.2 | 17.8 |
| Tm | °C | 266 | 266 | 266 | 266 | 232 | 234 |
| Hm | J/g | 32.4 | 29.6 | 18.0 | 29.0 | 29.2 | 19.3 |
| Tcc | °C | 239 | 239 | 239 | 222 | 206 | 169 |
| Hcc | J/g | 29.8 | 21.3 | 11.6 | 20.5 | 25.6 | 17.9 |
| Tm - Tcc | °C | 27 | 27 | 27 | 44 | 26 | 65 |
| Tm - Tg | °C | 150 | 150 | 150 | 146 | 122 | 125 |

**[Table 3]**

| | | Example 10 | Example 11 | Comparative Example 4 |
|---|---|---|---|---|
| Polyamide resin (A) | Type | 1,4-BAC6 | | |
| | t ratio (mol%) of BAC | 45 | | 45 |
| | Content (mass%) | 63 | 61 | 68 |
| Polyamide resin (B) | Type | PA10T | | - |
| | Content (mass%) | 7 | 7 | - |
| Glass fibers | Content (mass%) | 30 | 30 | 30 |
| Nucleator | Content (mass%) | - | 2 | 2 |
| | | | | |

| Physical Properties | Unit | | | |
|---|---|---|---|---|
| Tg | °C | 110 | 110 | 110 |
| Tch | °C | 151 | 150 | 156 |
| Hch | J/g | 13.8 | 13.0 | 18.8 |
| Tm | °C | 270 | 270 | 270 |
| Hm | J/g | 21.0 | 21.5 | 23.6 |
| Tcc | °C | 243 | 243 | 234 |
| Hcc | J/g | 16.1 | 18.3 | 21.1 |
| Tm - Tcc | °C | 27 | 27 | 36 |
| Tm - Tg | °C | 160 | 160 | 160 |

In the above-described tables, the t ratio (mol%) of BAC indicates the proportion of trans isomers in the BAC.

Here, a small value of Tm - Tcc indicates a fast crystallization rate. In addition, a small value of Tm - Tg indicates that the retention stability through heating during molding is excellent.

In the resin compositions of the present invention, a predetermined amount of the polyamide resin (B) was added to the polyamide resin (A), whereby the crystallization rate was remarkably increased. In particular, the results indicated that the crystallization rate can be increased without lowering the glass transition temperature of the resin composition, which is extremely valuable.

When the resin compositions of Examples 1 to 11 were injection-molded, good injection-molded articles were obtained.

## Claims

1. A resin composition, comprising from 75 to 99 parts by mass of a polyamide resin (A) and from 25 to 1 parts by mass of a polyamide resin (B),
the polyamide resin (A) comprising a diamine-derived structural unit and a dicarboxylic acid-derived structural unit, 70 mol% or higher of the diamine-derived structural unit being derived from a bis(aminomethyl)cyclohexane, and 70 mol% or higher of the dicarboxylic acid-derived structural unit being derived from an α,ω-linear aliphatic dicarboxylic acid having from 4 to 20 carbons, and
the polyamide resin (B) comprising a diamine-derived structural unit and a dicarboxylic acid-derived structural unit, 70 mol% or higher of the diamine-derived structural unit being derived from an aliphatic diamine having from 4 to 20 carbons, and 70 mol% or higher of the dicarboxylic acid-derived structural unit being derived from terephthalic acid.

2. The resin composition according to claim 1, wherein in the polyamide resin (A), the bis(aminomethyl)cyclohexane comprises 1,3-bis(aminomethyl)cyclohexane and/or 1,4-bis(aminomethyl)cyclohexane.

3. The resin composition according to claim 1 or 2, wherein in the polyamide resin (A), the α,ω-linear aliphatic dicarboxylic acid having from 4 to 20 carbons comprises adipic acid.

4. The resin composition according to any one of claims 1 to 3, wherein in the polyamide resin (B), the aliphatic diamine having from 4 to 20 carbons comprises at least one selected from 1,6-hexanediamine, 1,9-nonanediamine, and 1,10-decanediamine.

5. The resin composition according to claim 1, wherein in the polyamide resin (A), the bis(aminomethyl)cyclohexane comprises 1,3-bis(aminomethyl)cyclohexane and/or 1,4-bis(aminomethyl)cyclohexane, and the α,ω-linear aliphatic dicarboxylic acid having from 4 to 20 carbons comprises adipic acid, and in the polyamide resin (B), the aliphatic diamine having from 4 to 20 carbons comprises at least one selected from 1,6-hexanediamine, 1,9-nonanediamine, and 1,10-decanediamine.

6. The resin composition according to any one of claims 1 to 5, wherein a glass transition temperature (Tg) of the resin composition according to differential scanning calorimetry (DSC) is from 100 to 200°C.

7. The resin composition according to any one of claims 1 to 6, wherein a difference (Tm - Tcc) between a melting point (Tm) and a crystallization temperature at temperature drop (Tcc) of the resin composition as measured according to differential scanning calorimetry (DSC) is from 5 to 35°C.

8. The resin composition according to any one of claims 1 to 7, further comprising a reinforcing filler.

9. A molded article comprising the resin composition described in any one of claims 1 to 8.
